# EUROPÄISCHE PATENTSCHRIFT

(11) **EP 0 817 196 B1**
(45) Veröffentlichungstag und Bekanntmachung des Hinweises auf die Patenterteilung: **29.03.2000**
(21) Anmeldenummer: 97201666.1
(22) Anmeldetag: 03.06.1997
(51) Int. Cl.: G11B 33/04, G11B 23/03

(54) **Gehäuse mit einer auf einer Basisplatte angeordneten Halteanordnung**
Casing with a supporting arrangement disposed on a base plate
Boîtier avec un dispositif de maintien disposé sur une plaque de base

(30) Priorität: 04.07.1996 DE 19626925
(43) Veröffentlichungstag der Anmeldung: 07.01.1998
(73) Patentinhaber: Philips Corporate Intellectual Property GmbH, 52064 Aachen (DE); Koninklijke Philips Electronics N.V., 5621 BA Eindhoven (NL)
(72) Erfinder: Grobecker, Hermann, Röntgenstrasse 24, 22335 Hamburg (DE); Wilhelm, Henning, Röntgenstrasse 24, 22335 Hamburg (DE)
(74) Vertreter: von Laue, Hanns-Ulrich, Dipl.-Ing.

(56) Entgegenhaltungen:
- EP-A- 0 114 631
- EP-A- 0 420 350
- EP-A- 0 762 425
- WO-A-97/00216
- DE-A- 3 425 579
- US-A- 5 494 156

## Beschreibung

Die Erfindung bezieht sich auf ein Gehäuse mit einer auf einer Basisplatte angeordneten Halteanordnung, die kreisförmig angeordnete, radial federnde Klemmstege mit radial außenliegenden Klemmflächen zum Eingriff in eine Zentralöffnung mindestens eines plattenförmigen Informationsträgers, z.B. CD, aufweist, wobei
- zwischen den Klemmstegen angeordnete, starre Stützstege mit radial außenliegenden Stützflächen vorgesehen sind und wobei
- der Durchmesser der kreisförmig angeordneten Stützflächen etwas kleiner ist als der Durchmesser der Zentralöffnung des Informationsträgers.

Ein derartiges Gehäuse ist aus der US 5,494,156 bekannt.Die Halteanordnung dieses bekannten Gehäuses ist nur zur Halterung eines einzigen Informationsträgers vorgesehen.

Aus der EP 420350 ist ein Gehäuse mit zwei Deckelteilen und einem Mittelteil bekannt, wobei die Deckelteile an dem Mittelteil an gegenüberliegenden Seiten jeweils um eine Schwenkachse verschwenkbar angelagert sind.

Aus der EP 114631A1 ist ein Gehäuse bekannt, welches ein kastenförmiges Mittelteil aufweist, daß in der Ober- und Unterseite jeweils mit einem Deckel in Form eines kastenförmigen Bodenteils für die Aufnahme eines plattenförmigen Informationsträgers abgeschlossen ist.

Aus der DE 3425579A1 ist ein Gehäuse mit einer Zapfenanordnung zur Klemmung von plattenförmigen Informationsträgern bekannt, wobei die Zapfen der Zapfenanordnung so gestaltet sind, daß bei Ausübung eines axialen Drucks auf die eine Druckplatte darstellende Zapfenstirnseite der Formschluß zwischen den Zapfen und dem Informationsträger aufgehoben wird.

Aus der WO 97/00216 ist ein Gehäuse mit einer Halteanordnung bekannt, welche Klemmstege aufweist, die mittels eines Ringes miteinander verbunden sind.

Aus der nicht vorveröffentlichten älteren Anmeldung EP 762425A2 ist ein Gehäuse mit einer Halteanordnung bekannt, welche zwischen radial federnden Klemmstegen angeordnete starre Stützstege aufweist.

Das durch die EP-B 0 114 631 bekannt gewordene Gehäuse besitzt ein Mittelteil, zwei damit gelenkig verbundene Deckelteile und in das Mittelteil und die Deckteile einsetzbare Basisplatten, die im bekannten Beispiel als sogenannte Trays ausgebildet sind. Die Trays besitzen eine gegenüber ihrer Oberfläche aufragende Halteanordnung mit kreisförmig angeordneten, radial federnden Klemmstegen, die in eine Zentralöffnung einer von der Halteanordnung klemmbaren Compact-Disk einführbar sind. Bei anderen Gehäusen der eingangs genannten Art ohne ein derartiges Mittelteil ist ein Deckelteil mit einem ein Tray aufweisenden Bodenteil gelenkig verbunden, wobei das Tray ein oder mehrere CD's aufnehmen kann (P 196 00 874.3).

Es kommt immer wieder vor, daß bei starken Stoßbeanspruchungen die radial federnden Klemmstege der Halteanordnung brechen, insbesondere bei solchen Ausführungen, bei denen aus Kostengründen Material gespart wurde und die somit relativ dünne Klemmstege aufweisen. Sobald ein oder mehrere derartige Klemmstege jedoch gebrochen sind, ist ein sicherer Halt der CD nicht mehr gewährleistet.

Der Erfindung liegt die Aufgabe zugrunde, für Gehäuse der eingangs genannten Art eine Klemmanordnung zu schaffen, welche die Klemmung von wenigstens zwei Informationsträgern ermöglicht.

Diese Aufgabe wird gemäß der Erfindung bei einem Gehäuse der eingangs genannten Art dadurch gelöst,
- daß die Halteanordnung mindestens zwei Gruppen von unterschiedlichen, unabhängigen Klemmstegen mit jeweils in unterschiedlichen Ebenen angeordneten Klemmflächen zur Klemmung jeweils eines Informationsträgers aufweist
- daß die jeweils in einer besonderen Ebene liegenden Klemmflächen in Richtung auf die Ebene der Basisplatte derart verjüngt ausgebildet sind, daß der größte Außendurchmesser der kreisförmig angeordneten Klemmflächen etwas größer ist als der Durchmesser der Zentralöffnung der Informationsträger,
- daß die an die jeweiligen Klemmflächen angrenzenden Flächen der Klemmstege rechtwinklig zur Ebene der Basisplatte verlaufen und deren Außendurchmesser etwas kleiner ist als der Durchmesser der Zentralöffnung der Informationsträger und
- daß der Außendurchmesser der Stützflächen bei geklemmten Informationsträgern gleich oder etwas kleiner ist als der Außendurchmesser der rechtwinklig verlaufenden Flächen der Klemmelemente.

Eine derartige Ausgestaltung ermöglicht eine sichere Halterung von übereinander liegenden Informationsträgern innerhalb eines Gehäuses.

Bei Gehäusen, die mehr als eine Informationsplatte aufweisen, steht naturgemäß zur Klemmung jeweils eines Informationsträgers nur eine geringere Anzahl von Klemmstegen zur Verfügung. Wenn z.B. eine handelsübliche Klemmanordnung zwölf Klemmstege aufweist, so sind bei einer Anordnung von zwei Informationsträgern nur sechs Klemmstege für jeden Informationsträger und bei einer Anordnung von drei Informationsträgern in einem Gehäuse jeweils nur vier Klemmstege für einen Informationsträger vorhanden.

Vorzugsweise sollen die erfindungsgemäßen Stützstege abwechselnd zwischen den Klemmstegen angeordnet sein, so daß auf einen Klemmsteg ein Stützsteg und dann wieder ein Klemmsteg folgt. Bei einer derartigen Bauweise würden statt bisher zwölf Klemmstege jetzt sechs Klemmstege vorgesehen sein, zwischen denen jeweils ein Stützsteg liegt. Damit ergäbe sich die Möglichkeit, bei sechs Klemmstegen zwei Informationsträger zu haltern, wobei jeder Informationsträger von drei Klemmstegen gehalten würde.

Es ist jedoch ebenso möglich, z.B. acht Klemmstege auf dem Umfang zu verteilen, wobei jeweils vier Klemmstege zur Halterung einer Informationsplatte vorgesehen sind. Zwischen den acht federnden Klemmstegen wäre wiederum gleichmäßig verteilt acht starre Stützstege vorgesehen.

Eine derartige Ausbildung gewährleistet ferner, daß bei starken Stoßbeanspruchungen die CD nunmehr mit dem Rand ihrer Zentralöffnung gegen die Stützflächen der Stützstege gedrückt wird und somit eine Belastung der Klemmstege vermieden wird. Die Stoßbeanspruchungen werden also durch die starren Stützstege aufgefangen, so daß die Gefahr eines Brechens der Klemmelemente vermieden ist.

In Ausgestaltung der Erfindung verlaufen die Stützstege rechtwinklig zur Ebene der Basisplatte und ragen etwa bis in den freien Endbereich der Klemmstege. Die rechtwinklige Ausgestaltung ermöglicht ein optimales Auffangen des Informationsträgers bei einem Stoßbetrieb, und die Ausbildung bis in den Endbereich der Klemmstege gewährleistet, daß in jeder Lage ein sicheres Abfangen gewährleistet ist.

In Ausgestaltung der Erfindung ist vorgesehen, daß die Stützstege durch ein gemeinsames starres Stützelement fest miteinander verbunden sind. Dadurch wird die Zuverlässigkeit erhöht, ferner können die Stützstege dünner gestaltet werden, da nunmehr die Hauptkräfte einer Stoßbelastung von dem starren Stützelement aufgefangen werden.

In weiterer Ausgestaltung der Erfindung ist vorgesehen, daß die Stützstege an ihren freien Enden mit dem Stützelement verbunden sind. Bei einer derartigen Ausgestaltung sind die Stützstege an ihren beiden Enden abgestützt, während im Mittelbereich keine Abstützung vorgesehen ist. Eine solche Bauweise ergibt gute Ergebnisse, wenn die Halteanordnung nur für eine einzige CD ausgebildet ist. Auch bei einer verlängerten Ausführung der Halteanordnung ergeben sich gute Verhältnisse, dabei kann hier in weiterer Ausgestaltung der Erfindung an jeder Verbindungsstelle des Stützelementes mit den Stützstegen jeweils eine Versteifungsrippe vorgesehen sein.

Eine optimale Ausbildung der Erfindung ergibt sich dadurch, daß in weiterer Ausgestaltung der Erfindung die Stützstege jeweils in ihren Mittenbereichen mit dem gemeinsamen Stützelement verbunden sind. Diese Bauart ist besonders vorteilhaft, wenn z.B. zwei plattenförmige Informationsträger von der Halteanordnung aufgenommen werden. Um auch hier jede Gefahr des Brechens zu vermeiden, kann in weiterer Ausgestaltung der Erfindung auch oberhalb des Stützelementes wiederum jeweils eine Versteifungsrippe an den Verbindungsstellen zwischen dem gemeinsamen Stützelement und den einzelnen Stützstegen vorgesehen sein.

Eine besonders einfache und kostengünstige Bauweise ergibt sich dadurch, daß das Stützelement und die Stützstege einteilig mit der Halteanordnung und der Basisplatte ausgebildet sind.

Eine weitere Ausgestaltung der Erfindung besteht darin, daß das gemeinsame Stützelement z.B. als Stützplatte oder als Speichenrad ausgebildet ist.

Die Erfindung wird vorteilhaft angewendet bei einem handelsüblichen Gehäuse mit einem Bodenteil, einem gelenkig am Bodenteil schwenkbar angeordneten Deckelteil und einem in das Bodenteil einsetzbaren Tray, wobei unter Beibehaltung der Außenabmessungen des Gehäuses das Tray als Basisplatte mit der zentralen Halteanordnung ausgebildet ist. Eine vorteilhafte Anwendung der Erfindung ist auch möglich bei einer Bauart, bei der unter Beibehaltung der Außenabmessungen des Gehäuses das Bodenteil als Basisplatte mit einer zentralen Halteanordnung ausgebildet ist. Die 1Halteanordnungen sind dabei dann mit den gemäß der Erfindung ausgestalteten Stützstegen und Stützelementen versehen.

Schließlich kann die Erfindung mit Vorteil auch angewendet werden bei einem handelsüblichen Gehäuse mit einem Mittelteil, mit zwei daran schwenkbar befestigten, gleichartig ausgebildeten Deckelteilen und mit je einem in die Deckelteile einsetzbaren Tray, wobei unter Beibehaltung der Außenabmessungen des Gehäuses die beiden Trays als Basisplatten mit jeweils einer zentralen Halteanordnung ausgebildet sind. Die Halteanordnungen sind dabei dann mit den gemäß der Erfindung ausgestalteten Stützstegen und Stützelementen versehen.

In der Zeichnung sind in den Fig. 1 bis 7 Ausführungsbeispiele des Gegenstandes gemäß der Erfindung schematisch dargestellt.
Fig. 1 zeigt eine Draufsicht einer Halteanordnung einer als Tray ausgebildeten Basisplatte,
Fig. 2 zeigt einen Schnitt II-II gemäß Fig. 1,
Fig. 3 zeigt einen Schnitt gemäß Fig. 2 bei einer etwas abgeänderten Bauart,
Fig. 4 zeigt einen Schnitt IV-IV gemäß Fig. 1,
Fig. 5 zeigt einen Schnitt V-V gemäß Fig. 1,
Fig. 6 zeigt eine geschnittene Seitenansicht eines Gehäuses zur Aufnahme von zwei CD's, und
Fig. 7 zeigt eine geschnittene Seitenansicht eines Gehäuses mit einem Mittelteil zur Aufnahme von sechs CD's.

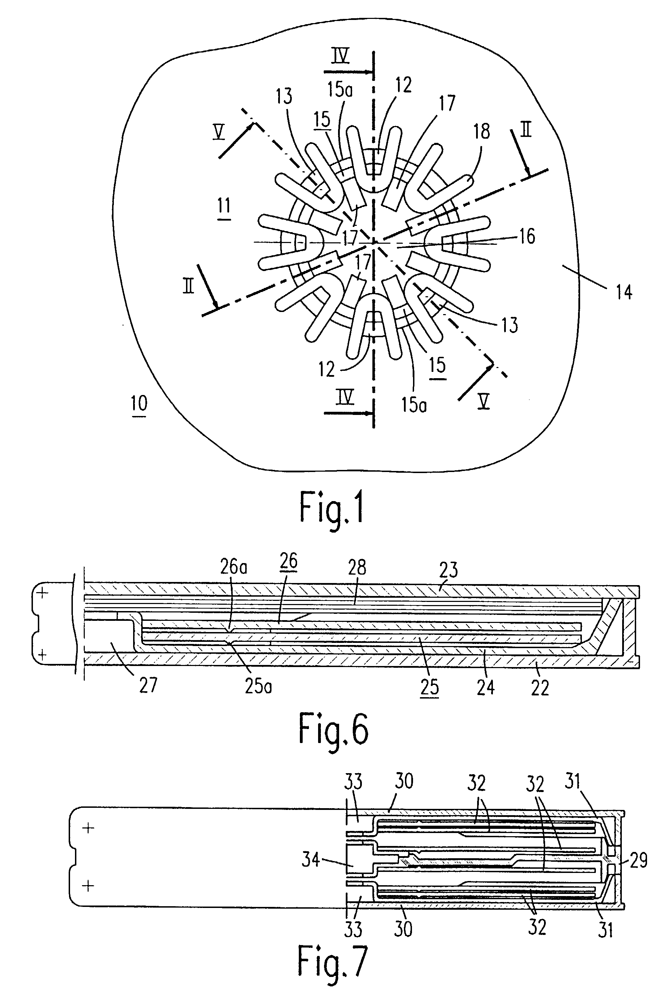

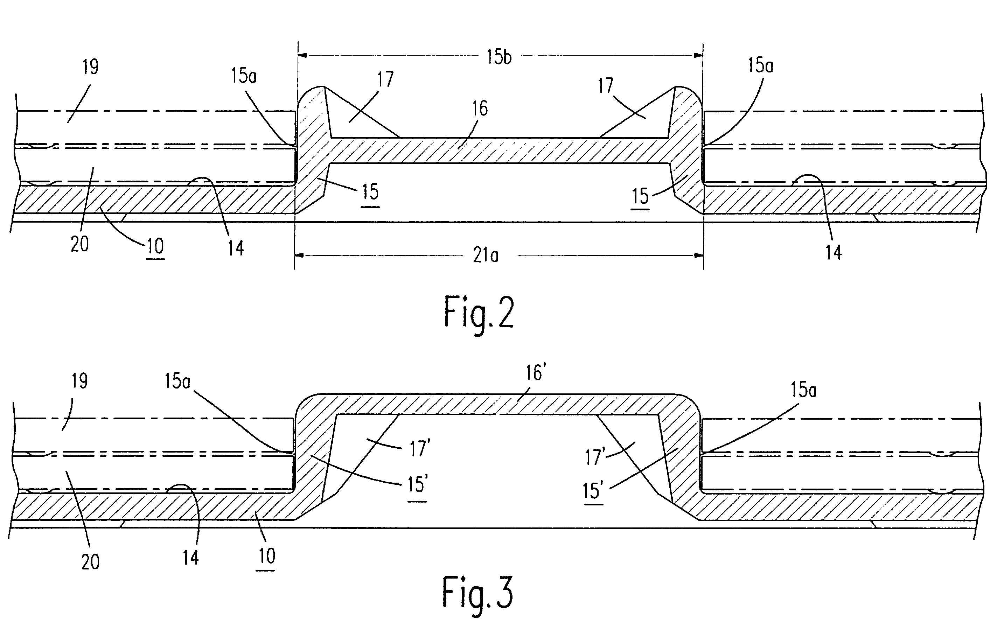

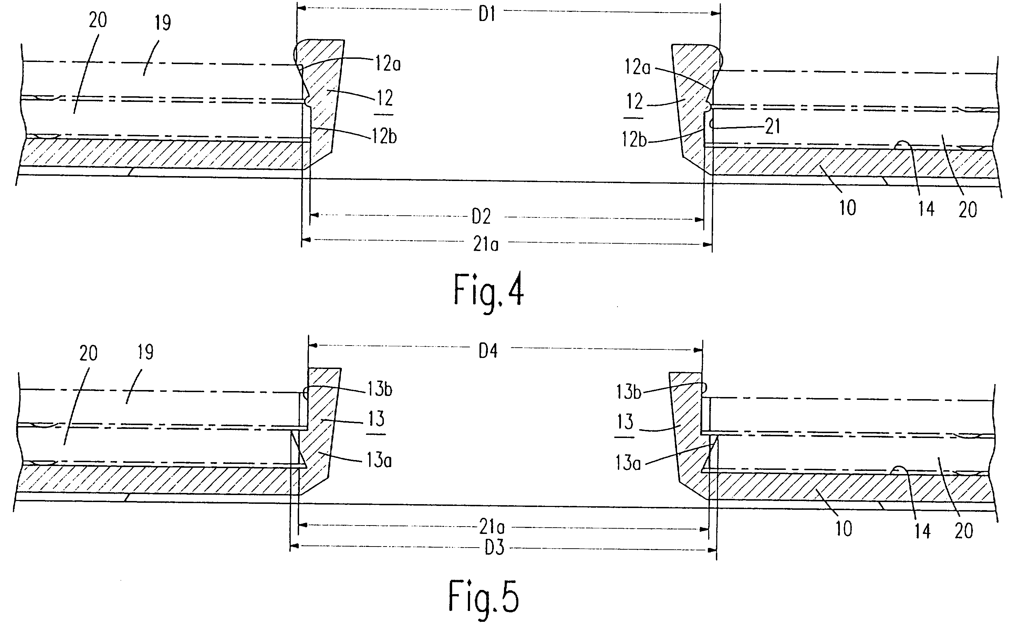

Das in Fig. 1 teilweise dargestellte Tray 10 besitzt eine zentrale Halteanordnung 11 und wird üblicherweise in ein Bodenteil eines nicht dargestellten Gehäuses eingesetzt, welches sodann mit einem Deckelteil verschlossen wird. Solche Gehäuse sind handelsüblich und seit langem bekannt. Die Halteanordnung 11 dient zur Halterung und Klemmung mindestens einer CD. Die Halteanordnung gemäß Fig. 1 enthält im vorliegenden Ausführungsbeispiel acht kreisförmig am Umfang verteilt angeordnete Klemmelemente 12 und 13, die etwa rechtwinklig zur Ebene 14 der Basisplatte 10 verlaufend angeordnet sind. Die Klemmelemente 12, 13 dienen hier zur Klemmung und Halterung von zwei übereinander liegenden plattenförmigen Informationsträgern (CD's) und sind mit entsprechend ausgebildeten, radial außenliegenden Klemmflächen versehen, wie weiter unten bei Fig. 4 und 5 beschrieben wird. Zwischen den Klemmelementen 12, 13 befinden sich Stützstege 15 mit radial außen ausgebildeten Stützflächen 15a. Die Stützflächen 15a verlaufen rechtwinklig zur Ebene 14. Die Stützstege 15 sind durch ein gemeinsames Stützelement 16, das im vorliegenden Ausführungsbeispiel als Stützplatte ausgebildet ist, fest und starr miteinander verbunden. Oberhalb der Stützplatte 16 befinden sich noch zusätzliche Versteifungsrippen 17, um die Festigkeit der Stützstege 15 zu erhöhen, siehe dazu Fig. 2. Die Stützstege 15, die Stützplatte 16 und die Klemmelemente 12, 13 bilden ein einteiliges Bauteil. Es kann hergestellt werden aus einem ursprünglich etwa hutförmigen Kunststoffbauteil, das sodann durch U-förmige Nuten 18 unterbrochen wird, wodurch die genannten radial federnden Klemmstege 12, 13 gebildet werden.

Fig. 3 zeigt ein im Hinblick auf Fig. 2 leicht abgeändertes Ausführungsbeispiel, wobei die Platte 16' hier nicht im Mittenbereich der Stützstege 15', sondern an deren äußeren Enden mit diesen verbunden ist. Bei diesem Ausführungsbeispiel können zusätzliche Versteifungsrippen 17' unterhalb der Stützplatte 16' angeordnet sein, wie aus der Zeichnung gemäß Fig. 3 zu erkennen ist.

Die Klemmelemente 12, 13 gemäß Fig. 1 dienen zur Halterung und Klemmung von zwei übereinander liegenden CD's 19, 20, die in Fig. 4 und 5 strichpunktiert dargestellt sind. Fig. 4 zeigt einen Schnitt durch die Klemmelemente 12, die zur Klemmung der obenliegenden CD 19 dienen. Fig. 5 zeigt einen Schnitt durch die Klemmelemente 13, die zur Klemmung der untenliegenden CD 20 dienen. Die Klemmelemente 12, 13 sind hier in nichtklemmendem Zustand und stark vergrößert, nicht maßstabsgetreu dargestellt.

Die radial federnden Klemmstege 12 gemäß Fig. 4 besitzen konisch in Richtung auf die Ebene 14 des Trays 10 sich verjüngende Klemmflächen 12a und daran sich anschließende, rechtwinklig zur Ebene 14 ausgerichtete Flächen 12b. Die Klemmflächen 12a dienen zur Klemmung der CD 19, während die Flächen 12b keine Klemmfunktion haben. Der größte Außendurchmesser D1 der Klemmflächen 12a ist in nicht klemmendem Zustand, d. h. ohne aufgesetzte CD 19, etwas größer als der Durchmesser 21a der CD-Zentralöffnung 21. Der Außendurchmesser D2 der geraden Flächen 12b ist etwas kleiner als der Durchmesser 21a der Zentralöffnung 21.

Gemäß Fig. 5 dienen die Klemmstege 13 zur Klemmung der untenliegenden CD 20. Die Klemmstege 13 besitzen der Ebene 14 des Trays 10 benachbarte Klemmflächen 13a, die sich konisch in Richtung auf die Ebene 14 hin verjüngen. Der maximale Außendurchmesser D3 der Klemmflächen 13a ist im nichtklemmenden Zustand etwas größer als der Durchmesser 21a der Zentralöffnung 21. Oberhalb der Klemmflächen 13a befinden sich gerade Flächen 13b, deren Durchmesser D4 etwas kleiner ist als der Durchmesser 21a der Zentralöffnung 21, so daß diese Flächen 13b der Klemmung der CD 20 nicht im Wege stehen.

Der Außendurchmesser 15b der Stützflächen 15a der Stützelemente 15 (Fig. 2) ist kleiner oder höchstens so groß wie der Durchmesser D₂, D₄ der nicht zur Klemmung dienenden geraden Flächen 12b, 13b der Klemmstege 12, 13 (Fig. 4 und 5).

Fig. 6 zeigt eine geschnittene Seitenansicht eines Gehäuses zur Aufnahme von zwei CD's, wobei die linke Seite nur teilweise und nicht im Schnitt dargestellt ist. Das Gehäuse besitzt ein Bodenteil 22, ein Deckelteil 23 und ein in das Bodenteil eingesetztes Tray 24, das zur Halterung von zwei CD's 25, 26 mit einer Halteanordnung 27 versehen ist, die entsprechend der Erfindung auf hier nicht näher dargestellte Weise entsprechend ausgebildet ist. Mit 25a, 26a sind vorstehende Ringe bezeichnet. 28 bezeichnet ein Textheft.

Fig. 7 zeigt eine geschnittene Seitenansicht eines Gehäuses mit einem Mittelstück zur Aufnahme von sechs CD's, wobei der linke Teil des Gehäuses nicht geschnitten dargestellt ist. Dieses Gehäuse besitzt ein Mittelteil 29 und zwei gleichartig ausgebildete Deckelteile 30, die jeweils mit einem Tray 31 zur Aufnahme von jeweils zwei CD's 32 versehen sind. Das Mittelteil trägt weitere zwei CD's 32. Die Halteanordnungen 33, 34 der beiden Deckelteile und des Mittelteiles 29 sind, wie hier nicht näher dargestellt ist, entsprechend der Erfindung ausgebildet.

## Patentansprüche

1. Gehäuse mit einer auf einer Basisplatte (10) angeordneten Halteanordnung (11), die kreisförmig angeordnete, radial federnde Klemmstege (12, 13) mit radial außenliegenden Klemmflächen (12a, 13a) zum Eingriff in eine Zentralöffnung (21) mindestens eines plattenförmigen Informationsträgers (19, 20), z.B. CD, aufweist,
wobei
- zwischen den Klemmstegen (12, 13) angeordnete, starre Stützstege (15) mit radial außenliegenden Stützflächen (15a) vorgesehen sind und wobei
- der Durchmesser (15b) der kreisförmig angeordneten Stützflächen (15a) etwas kleiner ist als der Durchmesser (21a) der Zentralöffnung (21) des Informationsträgers (19, 20)
dadurch gekennzeichnet,
- daß die Halteanordnung (11) mindestens zwei Gruppen von unterschiedlichen, unabhängigen Klemmstegen (12, 13) mit jeweils in unterschiedlichen Ebenen angeordneten Klemmflächen (12a, 13a) zur Klemmung jeweils eines Informationsträgers (19, 20) aufweist
- daß die jeweils in einer besonderen Ebene liegenden Klemmflächen (12a, 13a) in Richtung auf die Ebene (14) der Basisplatte (10) derart verjüngt ausgebildet sind, daß der größte Außendurchmesser (D1, D3) der kreisförmig angeordneten Klemmflächen (12a, 13a) etwas größer ist als der Durchmesser (21a) der Zentralöffnung (21) der Informationsträger (19, 20),
- daß die an die jeweiligen Klemmflächen (12a, 13a) angrenzenden Flächen (12b, 13b) der Klemmstege (12, 13) rechtwinklig zur Ebene (14) der Basisplatte (10) verlaufen und deren Außendurchmesser (D2, D4) etwas kleiner ist als der Durchmesser (21a) der Zentralöffnung (21) der Informationsträger (19, 20) und
- daß der Außendurchmesser (15b) der Stützflächen (15a) bei geklemmten Informationsträgern (19, 20) gleich oder etwas kleiner ist als der Außendurchmesser (D2, D4) der rechtwinklig verlaufenden Flächen (12b, 13b) der Klemmelemente (12, 13).

2. Gehäuse nach Anspruch 1,
dadurch gekennzeichnet,
daß die Stützstege (15) rechtwinklig zur Ebene (14) der Basisplatte (10) verlaufen und bis etwa in den freien Endbereich der Klemmstege (12, 13) ragen.

3. Gehäuse nach Anspruch 1 oder 2,
dadurch gekennzeichnet,
daß die Stützstege (15) durch ein gemeinsames, starres Stützelement (16) fest miteinander verbunden sind.

4. Gehäuse nach Anspruch 3,
dadurch gekennzeichnet,
daß die Stützstege (15) jeweils in ihren Mittenbereichen mit dem gemeinsamen Stützelement (16) verbunden sind.

5. Gehäuse nach Anspruch 3,
dadurch gekennzeichnet,
daß die Stützstege (15') jeweils an ihren freien Enden mit dem Stützelement (16') verbunden sind.

6. Gehäuse nach einem der Ansprüche 3 bis 5,
dadurch gekennzeichnet,
daß an den Verbindungsstellen des Stützelementes (16, 16') mit den Stützstegen (15, 15') Versteifungsrippen (17, 17') vorgesehen sind.

7. Gehäuse nach Anspruch 3,
dadurch gekennzeichnet,
daß das Stützelement (16) als Stützplatte oder als Speichenrad ausgebildet ist.

8. Gehäuse nach einem der Ansprüche 1 bis 7,
dadurch gekennzeichnet,
daß das Stützelement (16) und die Stützstege (15) einteilig mit der Halteanordnung (11) und der Basisplatte (10) ausgebildet sind.

9. Gehäuse nach einem der Ansprüche 1 bis 8,
dadurch gekennzeichnet,
daß das Gehäuse mit einem Bodenteil (22), einem am Bodenteil schwenkbar angeordneten Deckelteil (23) und einem in das Bodenteil (22) einsetzbaren Tray (24) versehen ist, wobei unter Beibehaltung der Außenabmessungen des Gehäuses das Tray (24) als Basisplatte mit der zentralen Halteanordnung (27) ausgebildet ist.

10. Gehäuse nach einem der Ansprüche 1 bis 9,
dadurch gekennzeichnet,
daß das Gehäuse mit einem Mittelteil (29), mit zwei daran schwenkbar befestigten, gleichartig ausgebildeten Deckelteilen (30) und mit je einem in die Deckelteile (30) einsetzbaren Tray (31) versehen ist, wobei unter Beibehaltung der Außenabmessungen des Gehäuses die beiden Trays (31) als Basisplatten mit jeweils einer zentralen Halteanordnung (33) ausgebildet sind.

## Claims

1. A housing with a retaining device (11) which is arranged on a base plate (10) and which comprises clamping studs (12, 13) which are arranged in a circle, which are radially resilient, and which have clamping surfaces (12a, 13a) facing radially outwards for gripping into a central opening (21) of at least one disc-shaped information carrier (19, 20), for example a CD, characterized in that
- the retaining device (11) comprises at least two groups of different, independent clamping studs (12,13), each group having clamping surfaces (12a,13a) arranged in a different plane for clamping an information carrier (19,20) in each plane.
- the clamping surfaces (12a,13a) lying in their particular planes are constructed so as to taper towards the plane (14) of the base plate (10), such that the greatest outer diameter (D1,D3) of the clamping surfaces (12a,13a) arranged in a circle is somewhat greater than the diameter (2 la) of the central opening (21) of the information carriers (19,20),
- the surfaces (12b,13b) of the clamping studs (12,13) adjoining the relevant clamping surfaces (12a,13a) extend at right angles to the plane (14) of the base plate (10) and have an outer diameter (D2,D4) which is somewhat smaller than the diameter (21a) of the central opening of the information carrier (19,20), and
- the outer diameter (15b) of the support surfaces (15a) is equal to or somewhat smaller than the outer diameter (D2,D4) of the perpendicular surfaces (12b,13b) of the clamping studs (12,13) in the case in which information carriers (19,20) are retained.

2. A housing as claimed in Claim 1, characterized in that the support studs (15) extend at right angles to the plane (14) of the base plate (10) and project approximately up to the free-end region of the clamping studs (12, 13).

3. A housing as claimed in Claim 1 or 2, characterized in that the support studs (15) are fixedly connected to one another by a common rigid support element (16).

4. A housing as claimed in Claim 3, characterized in that the support studs (15) are connected in their respective central regions to the common support element (16).

5. A housing as claimed in Claim 3, characterized in that the support studs (15') are connected to the support element (16') at their respective free ends.

6. A housing as claimed in any one of the Claims 3 to 5, characterized in that reinforcement ribs (17, 17') are provided at the connection points between the support element (16, 16') and the support studs (15, 15').

7. A housing as claimed in Claim 3, characterized in that the support element (16) is constructed as a support plate or as a spoke wheel.

8. A housing as claimed in any one of the Claims 1 to 7, characterized in that the support element (16) and the support studs (15) are constructed integrally with the retaining device (11) and the base plate (10).

9. A housing as claimed in any one of the Claims 1 to 8, characterized in that the housing is provided with a bottom part (22), a lid part (23) hinged to the bottom part, and a tray (24) which can be inserted into the bottom part (22), said tray (24) serving as the base plate with the central retaining device (27) while the outer dimensions of the housing retain unchanged.

10. A housing as claimed in any one of the Claims 1 to 9, characterized in that the housing is provided with a central part (29), with two identical lid parts (30) hinged thereto, and with a tray (31) which can be inserted into each of the lid parts (30), the two trays (31) serving as base plates each with a central retaining device (33) while the outer dimensions of the housing remain unchanged.

## Revendications

1. Boîtier avec un dispositif de maintien (11) disposé sur une plaque de base (10) qui présente des nervures de blocage (12, 13) élastiques radialement et disposées circulairement avec des surfaces de blocage (12a, 13a) externes radialement en vue de saisir dans une ouverture centrale (21) au moins un support d'informations en forme de disque (19, 20), par exemple un CD,
- des nervures d'appui (15) rigides disposées entre les nervures de blocage (12, 13) étant prévues avec des surfaces d'appui (15a) externes radialement et
- le diamètre (15b) des surfaces d'appui (15a) disposées circulairement étant légèrement inférieur au diamètre (21a) de l'ouverture centrale (21) du support d'informations (19, 20), caractérisé en ce
- que le dispositif de maintien (11) présente au moins deux groupes de nervures de blocage (12, 13) indépendantes et différentes avec les surfaces de blocage (12a, 13a) respectives disposées dans des plans différents en vue du blocage d'un support d'informations respectif (19, 20),
- que les surfaces de blocage (12a, 13a) disposées respectivement dans un plan particulier sont de conception effilée dans la direction du plan (14) de la plaque de base (10) de telle sorte que le diamètre externe maximal (D1, D3) des surfaces de blocage (12a, 13a) disposées circulairement est légèrement supérieur au diamètre (2 la) de l'ouverture centrale (21) du support d'informations (19, 20),
- que les surfaces (12b, 13b) des nervures de blocage (12, 13) adjacentes aux surfaces de blocage respectives (12a, 13a) s'étendent perpendiculairement au plan (14) de la plaque de base (10) et leur diamètre externe (D2, D4) est légèrement inférieur au diamètre (21a) de l'ouverture centrale (21) des supports d'informations (19, 20) et
- que le diamètre externe (15b) des surfaces d'appui (15a) est égal ou légèrement inférieur en cas de supports d'informations bloqués (19, 20) au diamètre externe (D2, D4) des surfaces perpendiculaires (12b, 13b) des éléments de blocage (12, 13).

2. Boîtier selon la revendication 1,
caractérisé en ce
que les nervures d'appui (15) s'étendent perpendiculairement au plan (14) de la plaque de base (10) et débordent environ jusqu'à la zone d'extrémité libre des nervures de blocage (12, 13).

3. Boîtier selon l'une des revendications 1 ou 2,
caractérisé en ce
que les nervures d'appui (15) sont reliées fixement entre elles par un élément d'appui (16) rigide commun.

4. Boîtier selon la revendication 3,
caractérisé en ce
que les nervures d'appui (15) sont respectivement reliées dans leurs zones centrales à l'élément d'appui commun (16).

5. Boîtier selon la revendication 3,
caractérisé en ce
que les nervures d'appui (15') sont respectivement reliées par leurs extrémités libres à l'élément d'appui (16').

6. Boîtier selon l'une des revendications 3 à 5,
caractérisé en ce
que des nervures raidisseuses (17, 17') sont prévues à hauteur des sites de jonction de l'élément d'appui (16, 16') avec les nervures d'appui (15, 15').

7. Boîtier selon la revendication 3,
caractérisé en ce
que l'élément d'appui (16) est conçu comme une plaque d'appui ou comme une roue à rayons.

8. Boîtier selon l'une des revendications 1 à 7,
caractérisé en ce
que l'élément d'appui (16) et les nervures d'appui (15) sont conçus en une seule pièce avec le dispositif de maintien (11) et la plaque de base (10).

9. Boîtier selon l'une des revendications 1 à 8,
caractérisé en ce
que le boîtier est muni d'une pièce de fond (22), d'une pièce de couvercle (23) disposée à pivotement sur la pièce de fond et d'un plateau (24) à insérer dans la pièce de fond (22), le plateau (24) étant conçu comme une plaque de base avec le dispositif de maintien central (27) en préservant les dimensions extérieures du boîtier.

10. Boîtier selon l'une des revendications 1 à 9,
caractérisé en ce
que le boîtier est doté d'une pièce centrale (29) avec deux pièces de couvercle (30) de conception similaire et fixées à pivotement à celle-ci et d'un plateau (31) à insérer dans les pièces de couvercle (30), les deux plateaux (31) étant conçus comme des plaques de base avec un dispositif de maintien central respectif (33) en préservant les dimensions externes du boîtier.
